# EUROPÄISCHE PATENTANMELDUNG

(11) **EP 4 810 414 A1**
(43) Veröffentlichungstag der Anmeldung: **23.09.2026**
(21) Anmeldenummer: 25165325.9
(22) Anmeldetag: 21.03.2025
(51) Int. Cl.: B65G 47/86, B25J 15/04

(54) **GREIFEINRICHTUNG UND TRANSPORTVORRICHTUNG**

(71) Anmelder: Tyrolon GmbH, 6395 Hochfilzen (AT)
(72) Erfinder: SCHULNIG, Ludwig, 6392 St. Jakob i.H. (AT)
(74) Vertreter: Meissner Bolte Partnerschaft mbB

(57) **Zusammenfassung**

Die Erfindung schlägt eine Greifeinrichtung (10) zum Greifen, Halten und Führen von Behältern, insbesondere von flaschenähnlichen Behältern, mit mindestens einem Greifarmpaar (12) mit einem ersten Greifarm (14) sowie mit einem gegengleich ausgebildeten, zweiten Greifarm, wobei die beiden Greifarme (14, 16) jeweils einen Greifabschnitt (18) und einen Halteabschnitt (20) aufweisen, wobei die Halteabschnitte (20) jeweils ein Befestigungselement (22), insbesondere einen Lagerbolzen, aufweisen, mittels dem sie schwenkbar lagerbar sind, und wobei zumindest ein Halteabschnitt (20) der beiden Greifarme (14, 16) ein Betätigungsmittel (24) , insbesondere Steuernocken oder Betätigungshebel, aufweist, um das Greifarmpaar (12) von einer Schließ- in eine Öffnungsstellung bzw. von der Öffnungs- in eine Greifstellung zu bringen, und wobei der jeweilige Greifabschnitt (18) auswechselbar ist und über eine kraftschlüssige Verbindung (26) mit dem jeweiligen Halteabschnitt (20) verbunden bzw. verbindbar ist, vor. Des Weiteren schlägt die Erfindung eine Transportvorrichtung (70) mit einer oder mehreren Greifeinrichtungen (10) vor.

## Beschreibung

Die Erfindung betrifft eine Greifeinrichtung zum Greifen, Halten und Führen von insbesondere flaschenartigen Behältern mittels Greifarmpaaren sowie ein Transportvorrichtung zum Transportieren von Behältern.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z.B. Flaschen oder Dosen oder Gläser, die jeweils den Anforderungen entsprechend aus Glas, Metall oder Kunststoff bestehen.

Ein derartiges, in einer Greifeinrichtung verwendetes Greifarmpaar weist insbesondere, aber nicht ausschließlich einen ersten Greifarm und einen zweiten Greifarm auf, die durch eine Zangenbewegung einen Behälter greifen und durch eine form- und/oder kraftschlüssige Verbindung mit dem Behälter zwischen den beiden Greifarmen diesen Behälter halten, transportieren und führen können. Hierbei ist der zweite Greifarm insbesondere gegengleich zum ersten Greifarm ausgebildet. Bei der Zangenbewegung bewegt sich das Greifarmpaar von einer Öffnungsstellung in eine Greifstellung, wobei in der Öffnungsstellung ein Behälter zwischen den gespreizten bzw. beabstandeten Greifarmen positioniert werden kann und die Greifarme in der Greifstellung entweder einen Behälter greifen und halten oder, ohne einen zwischen den Greifarmen angeordneten Behälter, geschlossen sind und sich insbesondere berühren können.

In der Getränkeindustrie ist die Verwendung derartiger Greif- und Transportvorrichtungen, auch als Transport- oder Klammerstern bezeichnet, mit derartigen Greifarmpaaren, auch als Klammergreifer bezeichnet, bekannt. Hierbei ist es üblich, dass Flüssigkeiten wie beispielsweise Wasser, Säfte, Bier, etc. in Behältern, insbesondere Flaschen, zumindest im industriellen Umfang in Verarbeitungsstraßen bzw. Getränkeabfüllanlagen oder Behälterabfüll- und Transportsystemen abgefüllt und verschlossen werden. Eine Verarbeitungsstraße besteht üblicherweise aus einer Reinigungsanlage für die Behälter, einer Abfüllanlage zum Einfüllen der Flüssigkeit in die Behälter und einer Verschließanlage, die die Behälter verschließt. Die unterschiedlichen Anlagen sind mittels Zubringersystemen miteinander verbunden, die als Fließbänder, Transportsterne, etc. ausgebildet sein können.

Eine Greif- und Transportvorrichtung kann um eine Achse rotieren und weist am Rand einer insbesondere kreisförmigen Trägerplatte eine Vielzahl von Klammergreifern auf. Die Trägerplatte ist um die Achse rotierbar, wobei die Klammergreifer einen Behälter an insbesondere zur Trägerplatte tangential verlaufenden Transportflüssen der Behälter greifen und freigeben und zwischen diesen Punkten den Behälter entlang eines Kreisbogens transportieren.

Zwar sind Greifarmpaare auf Grund der Zangenbewegung geeignet, Behälter verschiedener Größen und Formen zu greifen; allerdings existieren Grenzen, die sowohl durch die Eigenschaften der Behälter als auch durch die Form und Größe der Greifarmpaare bedingt sind. Werden diese Grenzen überschritten, können zu kleine oder zu große Behälter, insbesondere mit einer unterschiedlichen Form, nicht mehr stabil gegriffen und gehalten werden. Daher kann es notwendig sein, die Greifarmpaare bei der Anpassung einer Verarbeitungsstraße auf einen neuen Behältertyp auszutauschen, welche die neuen Behälter problemlos halten können. Bei den oben genannten Situationen, in denen die Greifarme ausgetauscht werden müssen, werden die Anlagen gestoppt und die entsprechenden Greifarme in einem zeitaufwändigen Umrüstungsschritt händisch ausgetauscht.

Diese geplanten Betriebsunterbrechungen kosten Zeit und haben eine negative Auswirkung auf den Umsatz des die Transportsterne oder ähnliche, mit Greifarmen ausgestattete Anlagen betreibenden Unternehmens und sollten daher so kurz wie möglich ausfallen.

Weiterhin können ungeplante Betriebsunterbrechungen durch eine Beschädigung der Greifarme auftreten.

Es ist daher die Aufgabe der vorliegenden Erfindung, eine Greifeinrichtung und eine Transportvorrichtung zu konzipieren, die die aus dem Stand der Technik bekannten Nachteile behebt oder zumindest minimiert.

Diese Aufgabe wird erfindungsgemäß durch eine Greifeinrichtung nach Anspruch 1 und eine Transportvorrichtung nach Anspruch 13 gelöst.

Ein erster Aspekt der Erfindung ist eine Greifeinrichtung zum Greifen, Halten und Führen von Behältern, insbesondere von flaschenähnlichen Behältern, mit mindestens einem Greifarmpaar mit einem ersten Greifarm sowie mit einem gegengleich ausgebildeten, zweiten Greifarm. Die beiden Greifarme weisen jeweils einen Greifabschnitt und einen Halteabschnitt auf, wobei die Halteabschnitte jeweils ein Befestigungselement aufweisen, mittels dem sie schwenkbar lagerbar sind. In einer besonders vorteilhaften Ausgestaltung ist das Befestigungselement ein Lagerbolzen. Zumindest ein Halteabschnitt der beiden Greifarme weist ein Betätigungsmittel auf, um das Greifarmpaar von einer Schließ- in eine Öffnungsstellung bzw. von der Öffnungs- in eine Greifstellung zu bringen. Dabei ist der jeweilige Greifabschnitt auswechselbar und über eine kraftschlüssige Verbindung mit dem jeweiligen Halteabschnitt verbunden bzw. verbindbar.

Durch die Unterteilung des Greifarms, lässt sich der Greifabschnitt schnell und einfach austauschen. Dabei ist es je nach Ausgestaltung der kraftschlüssigen Verbindung möglich, das Auswechseln werkzeuglos durchzuführen.

Des Weiteren lässt die Unterteilung unterschiedliche Materialpaarungen zu. So kann der Halteabschnitt aus Metall sein und der Greifabschnitt aus einem Kunststoff. Denkbar ist auch, dass sowohl der Halteabschnitt als auch der Greifabschnitt aus einem Kunststoff sind, wobei sich die Kunststoffe unterscheiden können. Dabei können die Greiffinger der Greifabschnitte, also der Bereich, der die Behälter kontaktiert und greift, zumindest teilweise mit einem Gummi überzogen sein.

Dies ermöglich zum einen eine Gewichtseinsparung und zum anderen können Materialkosten gespart werden.

Des Weiteren erlaubt es diese Ausgestaltung auf Hinterschnitte zur Verbindung mit der Transportvorrichtung zu verzichten, da die Halteabschnitte im Einbauzustand verbleiben und bei einem Formatwechsel nicht ausgetauscht werden müssen. Demnach kann sich weniger Schmutz oder Ähnliches ansammeln und die Greifeinrichtung ist hygienisch und einfacher zu reinigen.

Vorliegend wird unter einer kraftschlüssigen Verbindung eine Verbindung zwischen dem Greifabschnitt und dem Halteabschnitt verstanden, bei der die Übertragung von Kräften und Momenten durch mechanischen Kontakt ohne zusätzliche Materialien wie Klebstoffe oder Schweißmittel erfolgt. Diese Verbindung beruht auf der Anpresskraft, die entweder durch Formschluss (z. B. durch Verzahnungen, Passungen oder Keilverbindungen) oder durch Reibung (z. B. bei Schraubverbindungen oder Klemmen) erzeugt wird. Dabei sind der Halteabschnitt und der Greifabschnitt durch Druckkräfte miteinander verbunden, was bedeutet, dass sie sich unter Last nicht relativ zueinander bewegen können, solange die Verbindung ausreichend fest ist. Die Verbindung wird durch eine Krafteinwirkung gelöst, beispielsweise wenn beim Auswechseln des Greifabschnitts an diesem gezogen wird.

Das Betätigungsmittel kann ein drehbar gelagerter Steuernocken sein. Der Steuernocken ist derart beschaffen und ausgebildet, dass mittels des Steuernockens bzw. Drehung des Steuernockens der Greifarm von wenigstens einer ersten Stellung, insbesondere einer Greifstellung, in wenigstens eine zweite Stellung, insbesondere eine Öffnungsstellung, und/oder umgekehrt bewegbar ist.

Des Weiteren kann das Betätigungsmittel als Betätigungshebel, auch Rollenhebel genannt, ausgebildet sein. Der Betätigungshebel ist dabei integral mit einem der Haltabschnitte der Greifarme gebildet, so dass eine auf den Betätigungshebel übertragene externe Kraft zum Drehen des Greifarms um seine Schwenkachse ausgeübt werden kann.

In einer weiteren vorteilhaften Ausgestaltung der Greifeinrichtung weist der jeweilige Halteabschnitt ein Kupplungssegment und der jeweilige Greifabschnitt ein Stecksegment für die kraftschlüssige Verbindung auf. Dabei sind das Stecksegment und das Kupplungssegment im Einbauzustand formschlüssig.

Das Prinzip beruht im weitesten Sinne auf dem Prinzip "Stecker - Steckdose". Demnach kann das Kupplungssegment das Stecksegment zumindest teilweise umgeben. Dies ermöglicht ein einfaches Verbinden des Greifabschnitts mit dem Halteabschnitt und die sichere Kraftübertragung beim Öffnen und Schließen der Greifarme. Gleichzeitig wird durch den Formschluss die Sicherheit der Verbindung während des Betriebs gewährleistet.

In einer besonders vorteilhaften Ausgestaltung der Greifeinrichtung weist das jeweilige Kupplungssegment mindestens eine Haltenase auf. Dabei ist die mindestens eine Haltenase ausgelegt, das Stecksegment zumindest abschnittsweise zu umgreifen oder in eine der mindestens einen Haltenase entsprechenden Vertiefung des Stecksegments einzugreifen.

Umgreift die Haltenase das Stecksegment, so trägt diese mindestens eine Haltenase zur Unterstützung der Verbindung. Die Haltenase ist dabei so ausgebildet, dass das Moment, welches im Betrieb auf den Greifarm bzw. den Halteabschnitt und damit auch die kraftschlüssige Verbindung wirkt, nicht zum Öffnen der kraftschlüssigen Verbindung führt, und dass eine Zugkraft, welche axial auf den Greifabschnitt wird, zum Öffnen der kraftschlüssigen Verbindung führt.

Des Weiteren kann die mindestens eine Haltenase als Positionierhilfe dienen, um sicher zu stellen, dass der Halteabschnitt die richtige Position erreicht hat und in dieser verbleibt.

Die kraftschlüssige Verbindung zwischen dem Greifabschnitt und dem Halteabschnitt kann eine Klemmverbindung sein. Alternativ oder zusätzlich kann die kraftschlüssige Verbindung auch eine Steckverbindung oder eine Bolzenverbindung sein.

Die Klemmverbindung verbindet Greif- und Halteabschnitt durch Klemmen oder Pressen. Die Kraftübertragung erfolgt durch Reibschluss und kann bei ausreichender Auslegung der Spannkraft auch Momente übertragen.

Steckverbindungen sind z. B. Nut- und Federverbindungen, die ein einfaches Stecken und Lösen ermöglichen. Derartige Steckverbindungen sind gleichzeitig drehmomentübertragend.

In einer weiteren vorteilhaften Ausgestaltung weist das Kupplungssegment des Halteabschnitts zum Auswechseln des ersten und zweiten Greifarms ein klappbares Wandelement auf, wobei das Wandelement mittels eines Scharniers klappbar ist.

Dies ermöglicht ein einfaches Lösen des Greifabschnitts von dem Halteabschnitt. Da durch das klappbare Wandelement bei Aufbringen einer Zugkraft auf den Halteabschnitt zumindest so weit aufklappt, dass ein Herausziehen des Stecksegments aus dem Kupplungssegment möglich ist.

Dabei kann es bei der Greifeinrichtung weiterhin von Vorteil sein, wenn das Scharnier eine Scharnierachse zum Klappen des Wandelements aufweist. Die Scharnierachse kann parallel oder orthogonal zu einer Mittelachse des Befestigungselements angeordnet sein.

Die Wahl der Position der Scharnierachse kann dabei in Abhängigkeit von der Greifeinrichtung bzw. der Transporteinrichtung getroffen werden.

Bei einer Greifeinrichtung mit einem klappbaren Wandelement kann es von Vorteil sein, wenn ein Federelement, insbesondere eine Blattfeder, an der Außenseite des Halteabschnitt vorgesehen ist, wobei das Federelement ausgelegt ist, das klappbare Wandelement geschlossen zu halten.

Die Federkraft des Federelements ist dabei ausreichend um im Betrieb das klappbare Wandelement geschlossen zu Halten und kann gleichzeitig zum Austauschen des Greifabschnitts mit einer minimalen Zugkraft überwunden werden. Das Federelement kann dabei aus Metall oder Kunststoff sein.

Des Weiteren kann es bei der Greifeinrichtung vorteilhaft sein, wenn ein Positionierelement zum Positionieren des Greifabschnitts in dem Halteabschnitt vorgesehen ist. Dabei ist das Positionierelement durch ein Wandelement des Halteabschnitts zumindest teilweise in den Greifabschnitt der Greifarme, insbesondere der Greiffinger der Greifarme, steckbar oder drehbar. Als Positionierelement haben sich eine Stellschraube oder ein Bolzen als besonders vorteilhaft herausgestellt.

Dabei hat es sich für die verbesserte Positionierung als vorteilhaft herausgestellt, wenn die Stellschraube bzw. der Bolzen von dem festen Wandelement in das Stecksegment des Greifabschnitts geschraubt bzw. gesteckt zu werden.

In einer weiteren Ausgestaltung der Greifeinrichtung kann es vorteilhaft sein, die Stellschraube bzw. den Bolzen ausgehend vom klappbaren Wandelement zumindest in das Stecksegment zu schrauben bzw. zu stecken.

Dies fixiert das klappbare Wandelement und verhindert ein Aufklappen.

Eine weitere Möglichkeit ein Aufklappen zu verhindern kann das Einschränken der Beweglichkeit des klappbaren Wandelements um die Scharnierachse sein. Hierfür bietet sich eine Stellschraube, beispielweise eine Flügelschraube, an, um diese schnell zu sichern und schnell zu lösen.

In einer weiteren Ausführung der Greifvorrichtung ist die kraftschlüssige Verbindung eine Schraubverbindung, wobei das Stecksegment ein Außengewinde aufweist, welches in ein Innengewinde des Kopplungssegments schraubbar ist.

Die Schraubverbindung ermöglicht eine einfache Montage und Demontage des Greifabschnitts von dem Halteabschnitt. Dies erleichtert zum einen die Wartung als auch den Austausch und bietet eine hohe Festigkeit und Zuverlässigkeit der Verbindung.

In einer weiteren Ausführung der Greifeinrichtung ist die kraftschlüssige Verbindung eine Schnappverbindung, beispielsweise eine Biegeschnappverbindung oder eine Ringschnappverbindung. Dabei weist das Kopplungssegment Rastöffnungen und das Stecksegment zumindest ein elastisches Schnappelement mit einer Rastnase auf. Dabei rastet in einem Verbindungsschritt die Rastnase des Schnappelements des Stecksegments in die Rastöffnung des Kupplungssegments ein.

Denkbar ist es dabei, dass vom Ansetzen des Stecksegments bis zum Einrasten der Rastnasen in die Ratsöffnungen des Kupplungssegments eine Rotation des Halteabschnitts um 20° bis 60° durchzuführen ist.

Die Rastnase dient dabei zum Sichern der Endposition. Gleichzeitig kann die Rastnase auch zum Lösen der Verbindung genutzt werden.

In einer weiteren Ausgestaltung sind die Halteabschnitte des ersten und zweiten Greifarms über ein Schließ- oder Öffnungsmittel miteinander gekoppelt. Dieses sorgt dafür, dass die Greifarme, die dem Betätigungsmittel entgegengesetzte Bewegung ausführen. Werden die Greifarme durch das Betätigungsmittel geöffnet, dann werden die Greifarme durch das Schließ- oder Öffnungsmittel geschlossen, und andersherum.

In einer vorteilhaften Ausgestaltung der Greifeinrichtung ist das Schließ- oder Öffnungsmittel für das Greifarmpaar ein Federelement, wobei an dem jeweiligen Halteabschnitt der Greifarme jeweils ein Halteelement, beispielsweise ein Haltepin, für das Federelement vorgesehen ist. Das Federelement kann dabei als eine Blattfeder, eine Druckfeder, eine Zugfeder oder eine Flachfeder ausgebildet sein. Zusätzlich oder alternativ kann das Schließ- oder Öffnungsmittel für das Greifarmpaar ein sich anziehendes oder abstoßendes Magnetpaar sein, wobei jeweils ein Magnet in einem Halteabschnitt der Greifarme angeordnet ist.

In einer weiteren Ausgestaltung der Greifeinrichtung sind die jeweiligen Befestigungselemente der Halteabschnitte der Greiffinger ausgebildet, in entsprechende Lageröffnungen einer Trägerplatte einer Transportvorrichtung eingepresst zu werden.

Die Pressverbindung ist ausreichend fest, um beim Austausch der Greifabschnitt den Zugkräften standzuhalten. Gleichzeitig lässt sich diese mittels des Hebeleffekts zerstörungsfrei lösen, so dass die Halteabschnitte getauscht werden können.

Ein zweiter Aspekt der Erfindung ist eine Transportvorrichtung zum Transportieren von Behältern mit einem oder mehreren Greifeinrichtungen nach dem ersten Aspekt. Dabei weist die Transportvorrichtung eine ringförmige Trägerplatte mit Lageröffnungen auf. Die Lageröffnungen sind derart ausgebildet, dass ein Positionieren und Befestigen der einen oder mehreren Greifeinrichtungen durch Einpressen der Befestigungselemente der jeweiligen Greifeinrichtung in die Lageröffnungen auf der Trägerplatte möglich ist.

Die Lageröffnung ist dabei insbesondere eine Öffnung eines Kugellagers. Diese sind besonders verschleißarm. Des Weiteren kann es vorteilhaft sein, zwischen dem Befestigungselement und der Lageröffnung eine Dichtung vorzusehen.

In einer vorteilhaften Ausgestaltung der Transportvorrichtung ist ein kreisbogenförmiges Betätigungselement zum Betätigen des Betätigungsmittels des zumindest einen Greifarms der einen oder mehreren Greifeinrichtungen vorgesehen, um das mindestens eine Greifarmpaar zu öffnen oder zu schließen.

Das kreisbogenförmige Betätigungselement kann auch Steuerkurve genannt werden. Dieses Betätigungselement weist eine definierte Form auf, um den Öffnungs- und den Greifvorgang zum definierten Zeitpunkt durchzuführen.

Des Weiteren kann es bei der Transportvorrichtung vorteilhaft sein, wenn die Trägerplatte aus Kunststoff ist.

Dies reduziert das Gewicht der gesamten Anlage, sodass die Antriebsleistung reduziert werden kann. Gleichzeitig wird durch die Gewichtsreduktion das Handling für die Mitarbeiter vereinfacht

Die Erfindung wird nachfolgend anhand von einem bevorzugten Ausführungsbeispiel mit weiteren Einzelheiten unter Bezug auf die beigefügten schematischen Zeichnungen näher erläutert.

In diesen zeigen:
- Figur 1: eine schematische Darstellung einer ersten Ausführungsform der Greifeinrichtung mit einem klappbaren Wandelement in einer Draufsicht;
- Figur 2: eine schematische Darstellung der ersten Ausführungsform der Greifeinrichtung mit einem klappbaren Wandelement in einer Seitenansicht;
- Figur 3: eine Darstellung a) der Schraubverbindung und b) der Schnappverbindung als mögliche kraftschlüssige Verbindungen zwischen dem Halteabschnitt und dem Greifabschnitt der Greifeinrichtung;
- Figur 4: perspektivische Ansicht einer Transportvorrichtung.

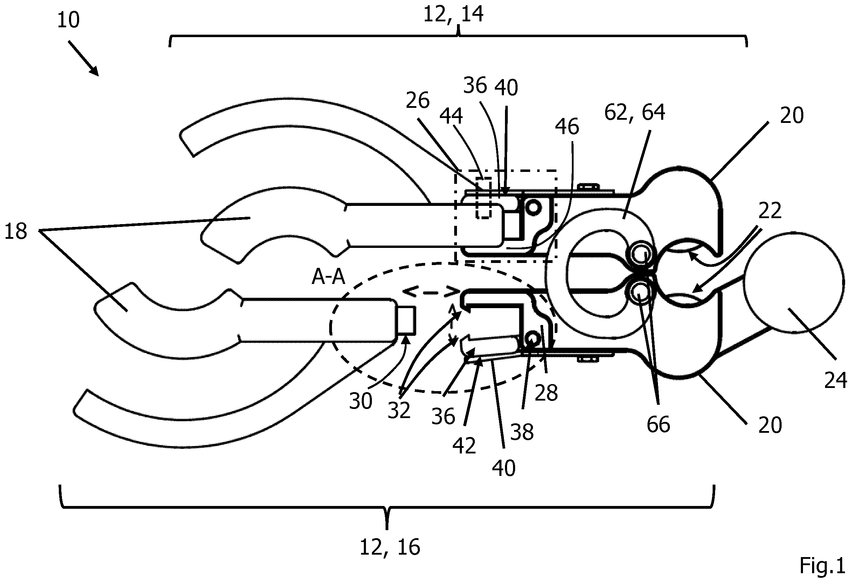

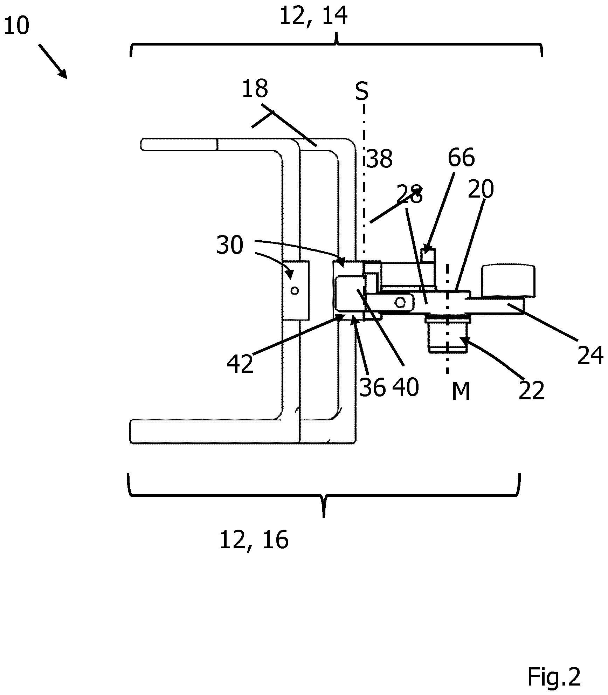

In den Figuren 1 und 2 ist ein Greifeinrichtung 10 zum Greifen, Halten und Führen von Behältern in einer Draufsicht und einer Seitenansicht dargestellt. Die Greifeinrichtung 10 kann dabei für flaschenähnliche Behälter ausgebildet sein.

Die Greifeinrichtung 10 weist mindestens ein Greifarmpaar 12 mit einem ersten Greifarm 14 sowie mit einem gegengleich ausgebildeten, zweiten Greifarm 16 auf. Dabei weisen die beiden Greifarme 14, 16 jeweils einen Greifabschnitt 18 und einen Halteabschnitt 20 auf. Zum schwenkbaren Lagern ist an den jeweiligen Halteabschnitten 20 jeweils ein Befestigungselement 22 angeordnet. Diese Befestigungselemente 22 sind, wie in Fig. 2 dargestellt, als Lagerbolzen ausgebildet. Zusätzlich sind die Befestigungselemente 22 bzw. die Lagerbolzen der Halteabschnitte 20 der Greifarme 14,16 ausgebildet, in entsprechende Lageröffnungen 74 einer Trägerplatte 72 einer Transportvorrichtung 70 eingepresst zu werden.

Des Weiteren ist an zumindest einem Halteabschnitt 20 der beiden Greifarme 14, 16 ein Betätigungsmittel 24 vorgesehen, um das Greifarmpaar 12 von einer Schließ- in eine Öffnungsstellung bzw. von der Öffnungs- in eine Greifstellung zu bringen. In den vorliegenden Figuren ist an dem zweiten Greifarm 16 ein Betätigungshebel vorgesehen, wobei dieser ausgelegt ist im Betrieb von einer Steuerkurve 76 einer Transportvorrichtung 70 zum Öffnen und Schließen angesteuert zu werden.

Die jeweiligen Greifabschnitt 18 sind auswechselbar und über eine kraftschlüssige Verbindung 26 mit dem jeweiligen Halteabschnitt 20 verbunden bzw. verbindbar. Dabei ist in Fig. 1 bei dem ersten Greifarm 14 die kraftschlüssige Verbindung 26 zwischen dem Halteabschnitt 20 und Greifabschnitt 18 bereits hergestellt. Bei dem dargestellten zweiten Greifarm 16 wird diese kraftschlüssige Verbindung 26 gerade hergestellt.

Dabei weist der jeweilige Halteabschnitt 20 ein Kupplungssegment 28 und der jeweilige Greifabschnitt 18 ein Stecksegment 30 für die kraftschlüssige Verbindung 26 auf. Dabei sind das Stecksegment 30 und das Kupplungssegment 28 im Einbauzustand formschlüssig, wie beim ersten Greifarm 14 in Fig. 1 dargestellt.

Wie in Schnitt A-A in Fig. 1 dargestellt, weist das Kupplungssegment 28 mindestens eine Haltenase 32 auf. In dem dargestellten Ausführungsbeispiel sind zwei Haltenasen 32 vorgesehen, welche an sich gegenüberliegend Wänden des Kupplungssegments 28 angeordnet sind. Die mindestens eine Haltenase 32 bzw. die beiden Haltenasen 32 sind ausgelegt, das Stecksegment 30 zumindest abschnittsweise zu umgreifen. Da abschnittsweise Umgreifen ist dabei ausreichend, um im Betrieb den flaschenartigen Behälter zu greifen und zu halten.

Um das Zusammenführen beim Auswechseln zu vereinfachen, weist das Kupplungssegment 28 des Halteabschnitts 20 zum Auswechseln des ersten und zweiten Greifarms 14, 16 ein klappbares Wandelement 36 auf. Dabei ist das klappbare Wandelement 36 mittels eines Scharniers 38 klappbar. Das klappbare Wandelement 36 kann, wie in Fig.1 dargestellt, eine Haltenase 32 aufweisen.

Die Scharnierachse S des Scharniers 38 zum Klappen des klappbaren Wandelements 36 ist vorliegend parallel zu der Mittelachse M des Befestigungselements 22 angeordnet.

Um das klappbare Wandelement 36 geschlossen zu halten, ist ein Federelement 40 an der Außenseite 42 des Halteabschnitt 20 vorgesehen. Im vorliegenden Ausführungsbeispiel der Fig. 1,2 ist das Federelement 40 als Blattfeder ausgebildet. Die Federkonstante des Federelements 40 ist dabei so zu wählen, dass das klappbare Wandelement 36 im Betrieb geschlossen bleibt und bei Aufbringen einer Zugkraft auf den Halteabschnitt 20, dass klappbare Wandelement 36 zum Herausziehen des Halteabschnitts 20 aufklappt.

Zum Positionieren des Greifabschnitts 18 in dem Halteabschnitt 20 ist ein Positionierelement 44 vorgesehen. Das Positionierelement 44 ist durch ein festes Wandelement 46 des Halteabschnitts 20 zumindest teilweise in den Greifabschnitt 18 der Greiffinger steckbar oder drehbar, dies ist in Fig. 1 strichliert dargestellt. Dabei das Positionierelement 44 eine Stellschraube oder ein Bolzen sein. Zusätzlich sind die beiden Halteabschnitte 20 über ein Schließ- oder Öffnungsmittel 62 miteinander gekoppelt. Dieses Schließ- oder Öffnungsmittel 62 für das Greifarmpaar 12 ist ein Federelement 64, welches an den Halteelementen 66 der Halteabschnitte 20 befestigt oder befestigbar sind. Das Halteelement 66 kann hier ein Haltepin sein. In der dargestellten Ausführungsform ist das Federelement 64 eine Blattfeder. Allerdings kann das Federelement auch eine Druckfeder, eine Zugfeder oder eine Flachfeder sein.

In einer hier nicht dargestellten Ausführungsform kann das Schließ- oder Öffnungsmittel 62 für das Greifarmpaar 12 ein sich anziehendes oder abstoßendes Magnetpaar 68 sein. Die Magnete sind dann gegenüberliegend in den jeweiligen Halteabschnitten 20 der Greifarme 14, 16 angeordnet.

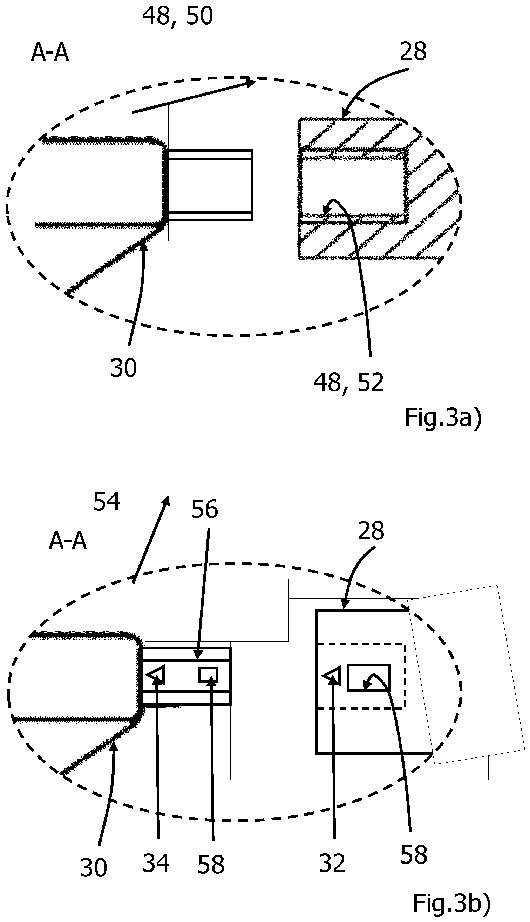

Die kraftschlüssige Verbindung 26 kann auch durch andere Verbindungsformen erzeugt werden, diese sind in den Fig. 3a) und 3b) dargestellt.

In Fig. 3a) ist eine Schraubverbindung 48 dargestellt, wobei das Stecksegment 30 ein Außengewinde 50 aufweist, welches in ein Innengewinde 52 des Kupplungssegments 28 schraubbar ist.

In Fig. 3b) ist eine Schnappverbindung 54 dargestellt. Dabei ist an dem Kupplungssegment 28 zumindest eine Rastöffnung 58 und an dem Stecksegment 30 zumindest ein elastisches Schnappelement 56 mit einer Rastnase 58 vorgesehen. In einem Verbindungsschritt rastet die Rastnase 58 des elastischen Schnappelements 56 des Stecksegments 30 in die Rastöffnung 60 des Kupplungssegments 28 ein. Um die Endposition zu fixieren ist eine bewegliche Haltenase 32 am Kupplungselement 28 vorgesehen, welche in die entsprechende Vertiefung 34 im Stecksegment 30 springt, sobald die Endposition erreicht ist.

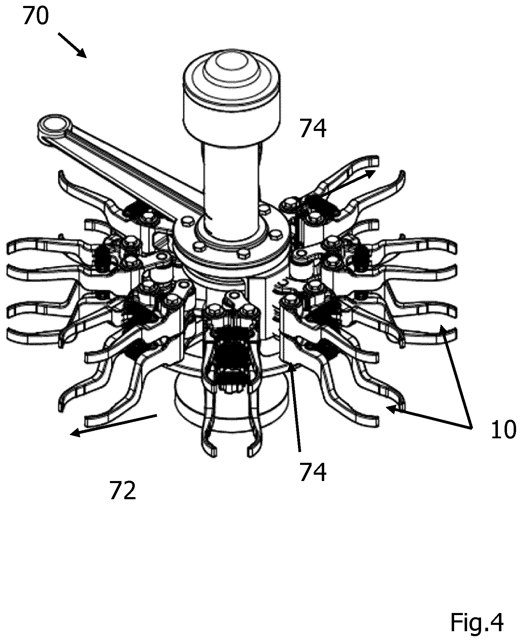

In Fig. 4 ist eine Transportvorrichtung 70 zum Transportieren von Behältern mit einer oder mehrerer Greifeinrichtungen 10 gemäß einer der Fig. 1 bis 3 dargestellt. Diese Transportvorrichtung 70 weist eine ringförmige Trägerplatte 72 aus Kunststoff mit Lageröffnungen 74 auf. Die Lageröffnung 74 ist derart ausgebildet ist, dass ein Positionieren und Befestigen der einen oder mehreren Greifeinrichtungen 10 durch Einpressen der Befestigungselemente 22 der jeweiligen Greifvorrichtung 10 in die Lageröffnung 74 auf der Trägerplatte 72 möglich ist.

Für eine verschleißarme Transportvorrichtung 70 werden Kugellager verwendet, so dass die Lageröffnung 74 vorliegend eine Kugellageröffnung ist.

Zusätzlich weist die Transportvorrichtung ein kreisbogenförmiges Betätigungselement 76, die Steuerkurve, auf. Diese ist so angeordnet, dass das Betätigungselement 76 zum einen parallel zur Trägerplatte 72 ist und zum anderen, dass das Betätigungselement 76 das Betätigungsmittel 24 des zumindest einen Greifarm 14, 16 der einen oder mehreren Greifeinrichtungen 10 betätigen kann, um das mindestens eine Greifarmpaar 12 zu öffnen oder zu schließen.

### Bezugszeichenliste

- 10: Greifeinrichtung
- 12: Greifarmpaar
- 14: ersten Greifarm
- 16: zweiten Greifarm
- 18: Greifabschnitt
- 20: Halteabschnitt
- 22: Befestigungselement
- 24: Betätigungsmittel
- 26: kraftschlüssige Verbindung
- 28: Kupplungssegment
- 30: Stecksegment
- 32: Haltenase
- 34: Vertiefung
- 36: klappbares Wandelement
- 38: Scharnier
- 40: Federelement
- 42: Außenseite
- 44: Positionierelement
- 46: festes Wandelement
- 48: Schraubverbindung
- 50: Außengewinde
- 52: Innengewinde
- 54: Schnappverbindung
- 56: elastisches Schnappelement
- 58: Rastnase
- 60: Rastöffnung
- 62: Schließ- oder Öffnungsmittel
- 64: Feder
- 66: Halteelement
- 70: Transportvorrichtung
- 72: ringförmige Trägerplatte
- 74: Lageröffnungen
- 76: kreisbogenförmiges Betätigungselement
- S: Scharnierachse
- M: Mittelachse

## Patentansprüche

1. Greifeinrichtung (10) zum Greifen, Halten und Führen von Behältern, insbesondere von flaschenähnlichen Behältern, mit:
mindestens einem Greifarmpaar (12) mit einem ersten Greifarm (14) sowie mit einem gegengleich ausgebildeten, zweiten Greifarm,
wobei die beiden Greifarme (14, 16) jeweils einen Greifabschnitt (18) und einen Halteabschnitt (20) aufweisen,
wobei die Halteabschnitte (20) jeweils ein Befestigungselement (22), insbesondere einen Lagerbolzen, aufweisen, mittels dem sie schwenkbar lagerbar sind, und
wobei zumindest ein Halteabschnitt (20) der beiden Greifarme (14, 16) ein Betätigungsmittel (24) , insbesondere Steuernocken oder
Betätigungshebel, aufweist, um das Greifarmpaar (12) von einer Schließin eine Öffnungsstellung bzw. von der Öffnungs- in eine Greifstellung zu bringen, und
wobei der jeweilige Greifabschnitt (18) auswechselbar ist und über eine kraftschlüssige Verbindung (26) mit dem jeweiligen Halteabschnitt (20) verbunden bzw. verbindbar ist.

2. Greifeinrichtung (10) nach Anspruch 1,
**dadurch gekennzeichnet, dass**
der jeweilige Halteabschnitt (20) ein Kupplungssegment (28) und der jeweilige Greifabschnitt (18) ein Stecksegment (30) für die kraftschlüssige Verbindung (26) aufweisen, wobei das Stecksegment (30) und das Kupplungssegment (28) im Einbauzustand formschlüssig sind.

3. Greifeinrichtung (10) nach Anspruch 1 oder 2,
**dadurch gekennzeichnet, dass**
das jeweilige Kupplungssegment (28) mindestens eine Haltenase (32), insbesondere zwei Haltenasen (32), welche gegenüberliegend angeordnet sind, aufweist, wobei die mindestens eine Haltenase (32) ausgelegt ist, das Stecksegment (30) zumindest abschnittsweise zu umgreifen oder in eine der mindestens einen Haltenase (32) entsprechenden Vertiefung (34) des Stecksegments einzugreifen.

4. Greifeinrichtung (10) nach einem der vorhergehenden Ansprüche
**dadurch gekennzeichnet, dass**
das Kupplungssegment (28) des Halteabschnitts (20) zum Auswechseln des ersten und zweiten Greifarms ein klappbares Wandelement (36) aufweist, wobei das klappbare Wandelement (36) mittels eines Scharniers (38) klappbar ist.

5. Greifeinrichtung (10) nach Anspruch 4,
**dadurch gekennzeichnet, dass**
das Scharnier (38) eine Scharnierachse (S) zum Klappen des klappbaren Wandelements (36) aufweist, wobei die Scharnierachse (S) parallel oder orthogonal zu einer Mittelachse (M) des Befestigungselements (22) angeordnet ist.

6. Greifeinrichtung (10) nach Anspruch 4 oder 5,
**dadurch gekennzeichnet, dass**
ein Federelement (40), insbesondere eine Blattfeder, an der Außenseite (42) des Halteabschnitt (20) vorgesehen ist, wobei das Federelement (40) ausgelegt ist, das klappbare Wandelement (36) geschlossen zu halten.

7. Greifeinrichtung (10) nach einem der vorhergehenden Ansprüche,
**dadurch gekennzeichnet, dass**
ein Positionierelement (44) zum Positionieren des Greifabschnitts (18) in dem Halteabschnitt (20) vorgesehen ist, wobei das Positionierelement (44) durch ein festes Wandelement (46) des Halteabschnitts (20) zumindest teilweise in den Greifabschnitt (18) der Greifarme (14,16) steckbar oder drehbar ist, insbesondere wobei das Positionierelement (44) eine Stellschraube oder ein Bolzen ist.

8. Greifeinrichtung (10) nach einem der Ansprüche 1 bis 3,
**dadurch gekennzeichnet, dass**
die kraftschlüssige Verbindung (26) eine Schraubverbindung (48) ist, wobei das Stecksegment (30) ein Außengewinde (50) aufweist, welches in ein Innengewinde (52) des Kupplungssegments (28) schraubbar ist.

9. Greifeinrichtung (10) nach einem der Ansprüche 1 bis 3,
**dadurch gekennzeichnet, dass**
die kraftschlüssige Verbindung (26) eine Schnappverbindung (54), wobei das Kupplungssegment (28) Rastöffnungen (58) und das Stecksegment (30) zumindest ein elastisches Schnappelement (56) mit einer Rastnase (58) aufweist, wobei in einem Verbindungsschritt die Rastnase (58) des elastischen Schnappelements (56) des Stecksegments (30) in die Rastöffnung (60) des Kupplungssegments (28) einrastet.

10. Greifeinrichtung (10) nach einem der vorhergehenden Ansprüche,
**dadurch gekennzeichnet, dass**
die beiden Halteabschnitte (20) über ein Schließ- oder Öffnungsmittel (62) miteinander gekoppelt sind.

11. Greifeinrichtung (10) nach Anspruch 10,
**dadurch gekennzeichnet, dass**
das Schließ- oder Öffnungsmittel (62) für das Greifarmpaar (12) eine Federelement (64), insbesondere eine Blattfeder, eine Druckfeder, eine Zugfeder oder eine Flachfeder, ist, wobei an dem jeweiligen Halteabschnitt (20) der Greifarme (14, 16) jeweils ein Halteelement (66), vorzugsweise ein Haltepin, für die Feder (64) vorgesehen ist und/oder dass
das Schließ- oder Öffnungsmittel (62) für das Greifarmpaar (12) ein sich anziehendes oder abstoßendes Magnetpaar (68) ist, wobei jeweils ein Magnet in den Halteabschnitten (20) der Greifarme (14, 16) angeordnet ist.

12. Greifeinrichtung (10) nach einem der vorhergehenden Ansprüche,
**dadurch gekennzeichnet, dass**
die jeweiligen Befestigungselemente (22) der Halteabschnitte (20) der Greifarme (14,16) ausgebildet sind, in entsprechende Lageröffnungen (74) einer Trägerplatte (72) einer Transportvorrichtung (70) eingepresst zu werden.

13. Transportvorrichtung (70) zum Transportieren von Behältern mit einer oder mehrerer Greifeinrichtungen (10) nach einem der Ansprüche 1 bis 12,
**dadurch gekennzeichnet, dass**
eine ringförmige Trägerplatte (72) mit Lageröffnungen (74), insbesondere Kugellageröffnungen, die derart ausgebildet ist, dass ein Positionieren und Befestigen der einen oder mehreren Greifeinrichtungen (10) durch Einpressen der Befestigungselemente (22) der jeweiligen Greifvorrichtung (10) in die Lageröffnung (74), insbesondere Kugellageröffnungen, auf der Trägerplatte (72) möglich ist.

14. Transportvorrichtung (70) nach Anspruch 13,
**dadurch gekennzeichnet, dass**
ein kreisbogenförmiges Betätigungselement (76) zum Betätigen des Betätigungsmittels (24) des zumindest einen Greifarms (14, 16) der einen oder mehreren Greifeinrichtungen (10) vorgesehen ist, um das mindestens eine Greifarmpaar (12) zu öffnen oder zu schließen.

15. Transportvorrichtung (70) nach Anspruch 13 oder 14,
**dadurch gekennzeichnet, dass**
die Trägerplatte aus Kunststoff ist.
